# EUROPEAN PATENT SPECIFICATION

(11) **EP 3 439 242 B1**
(45) Date of publication and mention of the grant of the patent: **03.12.2025**
(21) Application number: 17773129.6
(22) Date of filing: 22.03.2017
(51) Int. Cl.: H04L 41/0677, H04L 43/10, H04L 41/0631, H04L 41/0654, H04L 43/0817, H04L 43/0829, H04L 43/0876, H04L 41/0659

(54) **METHOD AND APPARATUS FOR NODE PROCESSING IN DISTRIBUTED SYSTEM**
VERFAHREN UND VORRICHTUNG ZUR KNOTENVERARBEITUNG IN EINEM VERTEILTEN SYSTEM
PROCÉDÉ ET APPAREIL DE TRAITEMENT DE NOEUDS DANS UN SYSTÈME DISTRIBUÉ

(30) Priority: 31.03.2016 CN 201610201955
(43) Date of publication of application: 06.02.2019
(73) Proprietor: Alibaba Group Holding Limited, Grand Cayman (KY)
(72) Inventor: FU, Haiwen, Hangzhou Zhejiang 311121 (CN); CHEN, Siyu, Hangzhou Zhejiang 311121 (CN); WU, Guozhao, Hangzhou Zhejiang 311121 (CN)
(74) Representative: Barker Brettell LLP
(86) International application number: PCT/CN2017/077717
(87) International publication number: WO 2017/167099

(56) References cited:
- CN-A- 101 188 527
- CN-A- 102 231 681
- CN-A- 103 001 809
- CN-A- 104 618 466
- CN-A- 105 357 069
- US-A1- 2005 144 505
- US-A1- 2012 042 030
- US-A1- 2015 019 671

## Description

### Technical Field

The present application relates to the field of data processing technologies, and, more particularly, to a method for processing nodes in a distributed system and an apparatus for processing nodes in a distributed system.

### Background

A distributed system is a system including one or more independent nodes that are geographically and physically scattered. The nodes include service nodes and a central node. The central node may coordinate the service nodes. The nodes may be connected together to share resources. The distributed system is equivalent to a unified whole.

In a running process of the distributed system, it is a very important link to monitor survival states of the service nodes. A common approach is that each service node in the distributed system sends survival state information to the central node at an interval of a preset cycle. After receiving the survival state information, the central node updates its state information table by using the survival state information. The state information table records the latest update time and a next update time of each service node. In order to monitor the survival states of the service nodes, the central node will view the state information table from time to time to confirm the survival states of the service nodes. If the central node finds that the next update time of a service node is less than the current system time, the service node is determined to be in an abnormal state.

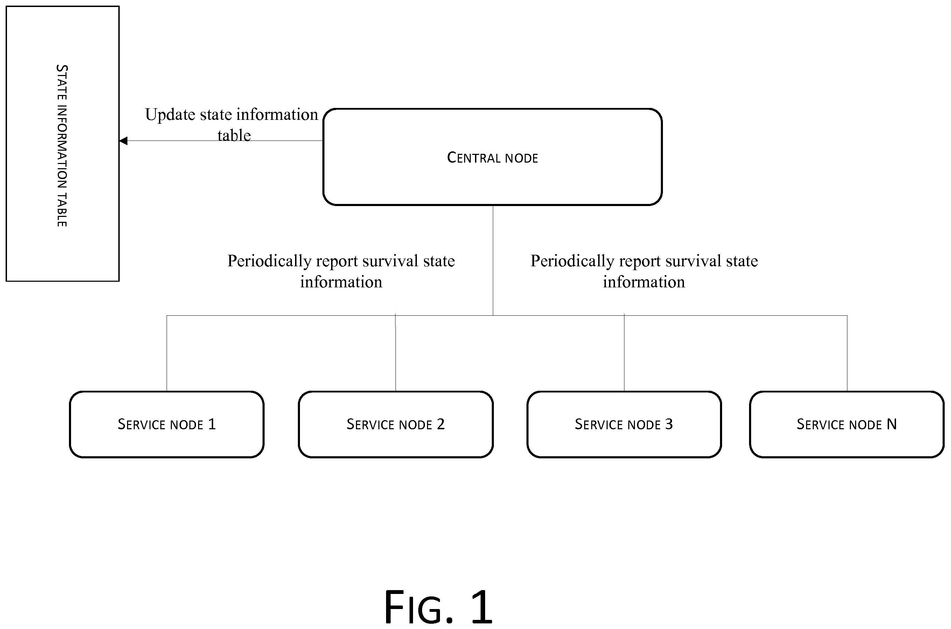

FIG. 1 shows a schematic diagram of a working process of a central node and service nodes in a distributed system. The central node of the system may manage and control the service nodes. The service nodes will report their survival state information to the central node periodically. The central node confirms survival states of the service nodes according to the survival state information and performs a failure processing procedure if a failed service node is found. However, it is possible that the central node cannot receive the survival state information reported by the service nodes due to a network delay or cannot process the survival state information in time due to an excessively high system resource load. All these situations may result in problems such as loss of the survival state information of the service nodes or invalidation of the next update time. In such cases, the central node may incorrectly determine the survival state of the service node.

US 2015/0019671 A1 describes a distributed processing system using Hadoop. A network interface card (NIC) beat generator of a slave server generates an NIC beat indicating that the slave server is normal every minute and an NIC beat transmitter transmits the NIC beat to a master server. In the case where an NIC beat receiver of the master server does not receive the NIC beat even after one minute or a predetermined period of time has elapsed, a slave server management unit specifies that the NIC beat is not received and the network has abnormality.

### Summary

In view of the foregoing problems, example embodiments of the present application are proposed to provide a method for processing nodes in a distributed system and a corresponding apparatus for processing nodes in a distributed system that solve or at least partially solve the foregoing problems.

In order to solve the foregoing problems, the invention provides a method for processing nodes in a distributed system as defined in claim 1.

Preferably, the distributed system includes a state information table, and the step of acquiring survival state information of the service nodes includes:
receiving the survival state information uploaded by the service node; and
acquiring central state information of the central node if there is an abnormality of the service node; and
processing the abnormal service node according to the central state information.

Preferably, the distributed system includes a state information table, and the step of acquiring survival state information of the service nodes includes:
receiving the survival state information uploaded by the service node; and
updating the state information table by using the survival state information of the service node.

Preferably, the step of determining, by using the survival state information and the current system information, whether there is an abnormality of the service node includes:
traversing to find the next update time of the service node in the state information table when a preset time arrives; and
determining, by using the next update time and the current system time, whether there is an abnormality of the service node.

Preferably, the step of determining, by using the next update time and the current system time, whether there is an abnormality of the service node includes:
determining whether the next update time is less than the current system time;
if yes, determining that there is an abnormality of the service node; and
if no, determining that there is no abnormality of the service node.

Preferably, the step of processing the abnormal service node according to the central state information includes:
determining, by using the network busyness status data and/or the system resource usage status data, whether the central node is overloaded; and
if yes, updating the survival state information of the abnormal service node in the state information table.

Preferably, the network busyness status data includes network throughput and a network packet loss rate, the system resource usage status data includes an average load of the system, and the step of determining, by using the network busyness status data and/or the system resource usage status data, whether the central node is overloaded includes:
determining whether the network throughput is greater than or equal to a network bandwidth;
determining whether the network packet loss rate is greater than a preset packet loss rate;
determining whether the average load of the system is greater than a preset load threshold; and
determining that the central node is overloaded if the network throughput is greater than or equal to the network bandwidth, and/or the network packet loss rate is greater than the preset packet loss rate, and/or the average load of the system is greater than the preset load threshold.

Preferably, the step of updating the survival state information of the abnormal service node in the state information table includes:
extending the next update time of the abnormal service node in the state information table.

Preferably, the step of updating the survival state information of the abnormal service node in the state information table includes:
sending an update request to the service node;
receiving new survival state information that is uploaded by the service node with respect to the update request, the new survival state information including a new next update time; and
updating the next update time of the abnormal service node in the state information table by using the new next update time.

Preferably, the method further includes:
treating the service node as a failed service node if there is abnormality of the service node.

Preferably, after the step of treating the service node as a failed service node, the method further includes:
deleting the failed service node from the central node; and
notifying other service nodes in the distributed system of the failed service node.

The invention also provides an apparatus for processing nodes in a distributed system as defined in claim 8.

Preferably, the distributed system includes a state information table, and the survival state information acquisition module includes:
a survival state information receiving sub-module configured to receive the survival state information uploaded by the service nodes; and
a first state information table update sub-module configured to update the state information table by using the survival state information of the service nodes.

Preferably, the service node abnormality determining module includes:
a state information table traversing sub-module configured to traverse next update time in the state information table when a preset time arrives; and
a service node abnormality determining sub-module configured to determine, by using the next update time and the current system time, whether there is an abnormality of the service node.

Preferably, the service node abnormality determining sub-module includes:
a time determination unit configured to determine whether the next update time is less than the current system time; if yes, call a first determining unit; and if no, call a second determining unit;
the first determining unit configured to determine that there is an abnormality of the service node; and
the second determining unit configured to determine that there is no abnormality of the service node.

Preferably, the abnormal service node processing module includes:
a central node state determining sub-module configured to determine, by using the network busyness status data and/or the system resource usage status data, whether the central node is overloaded; and if yes, call a second state information table update sub-module; and
the second state information table update sub-module configured to update the survival state information of the abnormal service node in the state information table.

Preferably, the network busyness status data includes network throughput and a network packet loss rate, the system resource usage status data includes an average load of the system, and the central node state determining sub-module includes:
a first network busyness status determination unit configured to determine whether the network throughput is greater than or equal to a network bandwidth;
a second network busyness status determination unit configured to determine whether the network packet loss rate is greater than a preset packet loss rate;
a system resource usage status determination unit configured to determine whether the average load of the system is greater than a preset load threshold; and
a central node load determining unit configured to determine that the central node is overloaded when the network throughput is greater than or equal to the network bandwidth, and/or the network packet loss rate is greater than the preset packet loss rate, and/or the average load of the system is greater than the preset load threshold.

Preferably, the second state information table update sub-module includes:
a next update time extension unit configured to extend the next update time of the abnormal service node in the state information table.

Preferably, the second state information table update sub-module includes:
an update request sending unit configured to send an update request to the service node;
a next update time receiving unit configured to receive new survival state information that is uploaded by the service node with respect to the update request, the new survival state information comprising a new next update time; and
a next update time updating unit configured to update the next update time of the abnormal service node in the state information table by using the new next update time.

Preferably, the apparatus further includes:
a failed service node determining module configured to use the service node as a failed service node if there is no abnormality of the service node.

Preferably, the apparatus further includes:
a failed service node deletion module configured to delete the failed service node from the central node; and
a failed service node notification module configured to notify other service nodes in the distributed system of the failed service node.

The example embodiments of the present application include the following advantages:
In a distributed system in the example embodiments of the present application, a central node confirms, according to survival state information reported by service nodes and current system information of the central node, whether there is an abnormality of the service node. When there is an abnormality of the service node, the central node will further process the abnormal service node according to state information of the central node. The example embodiments of the present application may comprehensively consider a state of the central node to adaptively process an abnormal service node, thus reducing wrong determination of a service node state due to problems of the central node and reducing an error probability of the central node.

### Brief Description of the Drawings

FIG. 1 is a schematic diagram of a working process of a central node and service nodes in a distributed system;
FIG. 2 is a flowchart of steps of a method for processing nodes in a distributed system according to the present application;
FIG. 3 is a flowchart of steps of a method for processing nodes in a distributed system according to the present application;
FIG. 4 is a flowchart of working steps of a central node and service nodes in a distributed system according to the present application;
FIG. 5 is a schematic diagram of a working principle of a central node and service nodes in a distributed system according to the present application; and
FIG. 6 is a structural block diagram of an example embodiment of an apparatus for processing nodes in a distributed system according to the present application.

### Detailed Description

In order to make the foregoing objectives, features and advantages of the present application easier to understand, the present application is described in further detail below with reference to the accompanying drawings and specific implementation manners.

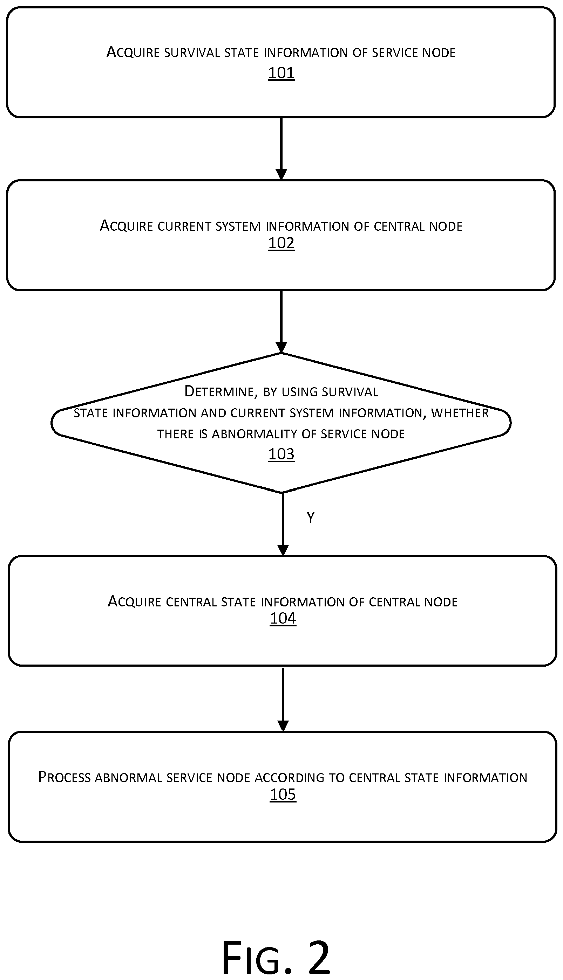

Referring to FIG. 2, a flowchart of steps of a method for processing nodes in a distributed system according to the present application is shown. The nodes may include service nodes and a central node. The method may specifically include the following steps:
Step 101. Survival state information of a service node is acquired.

In a specific implementation, the service node refers to a node having a storage function or a service processing function in the distributed system, and is generally a device such as a server. The central node refers to a node having a service node coordination function in the distributed system, and is generally a device such as a controller. It should be noted that the example embodiment of the present application is not only applicable to the distributed system but is also applicable to a system in which a node may manage and control other nodes, which is not limited in the example embodiment of the present application.

In a preferred example embodiment of the present application, the distributed system may include a state information table. Step 101 may include the following sub-steps:
Sub-step S11. The survival state information uploaded by the service nodes is received.
Sub-step S12. The state information table is updated by using the survival state information of the service nodes.

In a specific implementation, the service node is coordinated by the central node. Therefore, the central node needs to know whether the service node works normally. It may be understood that as a device having storage and service functions, the service node needs to execute many tasks. Repeated task execution, system failures and other phenomena may occur in the task executing process because of too many tasks, too small remaining memory and other reasons. Therefore, the service node needs to report survival state information to inform the central node whether there is an abnormality or a failure. The central node will perform corresponding processing according to whether the service node has an abnormality or a failure.

In an example of the present application, the central node stores a state information table. The table is used for storing survival state information that may reflect a survival state of the service node. The service node will periodically report its survival state information. The central node saves the survival state information in the state information table and updates a node state of the service node according to the survival state information. Certainly, the central node may also send a request to the service node when the central node is idle, so as to request the service node to upload its survival state information, which is not limited in the example embodiment of the present application.

Step 102. Current system information of the central node is acquired.

Step 103. The central node determines, by using the survival state information and the current system information, whether there is an abnormality of the service node; and step 104 is performed if there is an abnormality of the service node.

The survival state information includes a next update time of the service node, the current system information includes a current system time of the central node, and step 103 may include the following sub-steps:
Sub-step S21. Next update times in the state information table are traversed when a preset time arrives.
Sub-step S22. The central node determines, by using the next update times and the current system time, whether there is an abnormal service node among the service nodes.

In an example of the present application, the state information table stores a next update time of the service node. The next update time is reported by the service node to the central node according to a scheduling status of the service node and represents time for next survival state update. For example, the service node determines, according to its own scheduling status, that the next update time is February 24, 2016. If there is no abnormality of the service node, the service node should report the survival state information to the central node before February 24, 2016. In addition, the current system information may include a current system time at which the central node determines whether there is an abnormality of the service node. For example, the current system time may be February 25, 2016.

In a specific application, the time unit of the next update time and the current system time may be accurate to hour, minute and second, or rough to month and year, which is not limited in the example embodiment of the present application.

When the preset time arrives, the central node starts to detect whether there is an abnormality of the service node. Specifically, the central node starts to acquire its current system time, traverses next update times in the state information table, and compares each next update time with the current system time, so as to determine whether there is an abnormal service node among the service nodes. A cycle for traversing the state information table may be set to a fixed cycle, for example, 30 seconds, 1 minute, 10 minutes, 20 minutes, or the like; time for traversing may also be determined based on a service requirement.

In a preferred example embodiment of the present application, sub-step S22 may include the following sub-steps:
Sub-step S22-11. determining whether the next update time is less than the current system time of a respective service node; if yes, sub-step S22-12 is performed; if no, sub-step S22-13 is performed.
Sub-step S22-12. determining that there is an abnormality of the respective service node.
Sub-step S22-13. determining that there is no abnormality of the respective service node.

Whether there is an abnormality of the service node may be determined by determining whether the next update time of the service node is less than the current system time of the central node. It may be understood that the next update time is time when the service node reports next survival state information. Therefore, if the next update time is less than the current system time, it indicates that due report time of the service node has passed, and it may be determined that there is an abnormality of the service node. If the next update time is greater than or equal to the current system time, it indicates that the due report time of the service node has not passed yet, and it may be determined that there is no abnormality of the service node.

Step 104. Central state information of the central node is acquired.

Step 105. The abnormal service node is processed according to the central state information.

In the determination of an abnormal service node in the example embodiment of the present application, the state of the central node may also affect the determination of the service node abnormality. Therefore, the abnormal service node may be further processed with reference to the central state information of the central node.

In the distributed system in the example embodiment of the present application, the central node confirms whether there is an abnormality of the service node according to the survival state information reported by the service node and the current system information of the central node. When determining that there is an abnormality of the service node, the central node will further process the abnormal service node according to the central state information of the central node.

The example embodiment of the present application may comprehensively consider a state of the central node to adaptively process an abnormal service node, thus reducing wrong determination of a service node state due to problems of the central node and reducing an error probability of the central node.

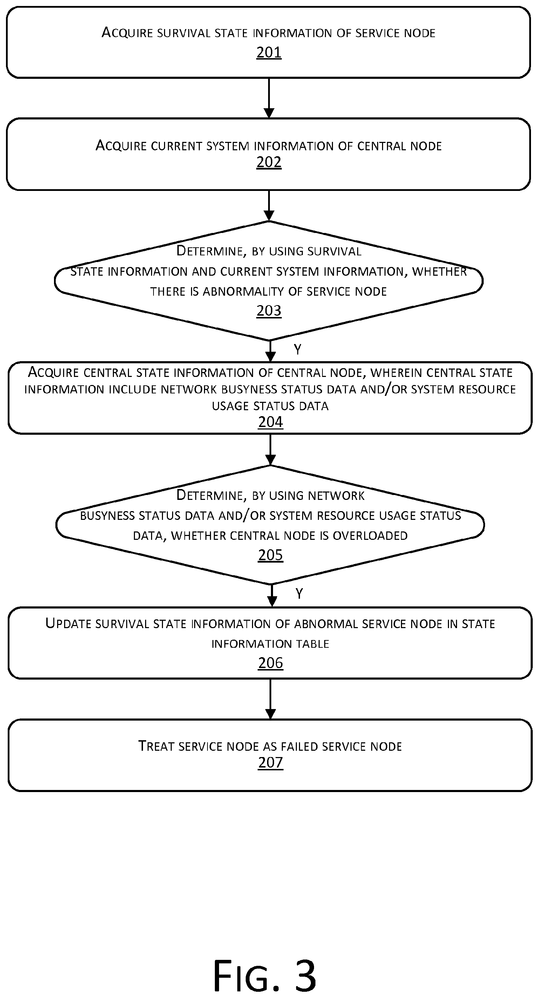

Referring to FIG. 3, a flowchart of steps of a method for processing nodes in a distributed system according to the present application is shown. The nodes may include service nodes and a central node. The method specifically may include the following steps:
Step 201. Survival state information of the service nodes is acquired.
Step 202. Current system information of the central node is acquired.
Step 203. The central node determines, by using the survival state information and the current system information, whether there is an abnormality of the service node; if there is an abnormality of the service node, step 204 is performed; if there is no abnormality of the service node, step 207 is performed.
Step 204. Central state information of the central node is acquired, wherein the central state information includes network busyness status data and/or system resource usage status data.
Step 205. The central node determines, by using the network busyness status data and/or the system resource usage status data, whether the central node is overloaded; and if yes, step 206 is performed.

In a specific application example of the present application, the network busyness status data may be embodied as network throughput and a network packet loss rate. The system resource usage status data may be embodied as an average load of the system.

Specifically, the network throughput is referred to as throughput for short, and refers to the amount of data that is transmitted successfully through a network (or a channel or node) at any given moment. The throughput depends on a current available bandwidth of the network of the central node, and is limited by the network bandwidth. The throughput is usually an important indicator for a network test performed in actual network engineering, and for example, may be used for measuring performance of a network device. The network packet loss rate refers to a ratio of the amount of lost data to the amount of sent data. The packet loss rate is correlated to network load, data length, data sending frequency, and so on. The average load of the system refers to an average quantity of processes in queues run by the central node in a particular time interval.

In a preferred example embodiment of the present application, step 205 may include the following sub-steps:
Sub-step S31. determining whether the network throughput is greater than or equal to a network bandwidth.
Sub-step S32. determining whether the network packet loss rate is greater than a preset packet loss rate.
Sub-step S33. determining whether the average load of the system is greater than a preset load threshold; sub-step S34 is performed if the network throughput is greater than or equal to the network bandwidth, and/or the network packet loss rate is greater than the preset packet loss rate, and/or the average load of the system is greater than the preset load threshold.
Sub-step S34. determining that the central node is overloaded.

In a specific application example of the present application, a formula for calculating the network busyness status of the central node is as follows:
network throughput ≥ bandwidth, or network packet loss rate > N%;
wherein a value range of N is: 1-100.

A formula for calculating the system resource usage status of the central node is as follows:
system resource usage status = system average load value > N;
wherein N is an integer, and generally, N > 1.

In the example embodiment of the present application, the determination is made based on the network busyness status data and the system resource usage status data of the central node. If some or all of the data reach some critical values, it indicates that the central node is overloaded. In this case, a service node that is previously determined as abnormal by the central node is not necessarily a failed service node. Then, the next update time of the service node needs to be extended. If no data reaches the critical values, it indicates that the load of the central node is normal. In this case, the service node that is previously determined as abnormal by the central node should be a failed service node. As such, by taking the state of the central node into consideration, wrong determination about the service node due to problems of the central node may be reduced.

Step 206. The survival state information of the abnormal service node in the state information table is updated.

In a preferred example embodiment of the present application, step 206 may include the following sub-steps:
Sub-step S41. The next update time of the abnormal service node in the state information table is extended.

In the example embodiment of the present application, the central node determines, with reference to the network busyness status and the system resource usage status of the central node, whether there is a failure among the service nodes. If the network is very busy or the system resources are very busy, the failure determination made by the central node for the service nodes is less credible. For example, update of survival states of the service nodes in the state information table may fail due to busyness of resources. In this case, the determination made by the central node may be not accepted, and processing of the central node is determined as failed. Meanwhile, in the state information table, the next update time of the service node that is previously determined as abnormal is extended correspondingly.

In a preferred example embodiment of the present application, step 206 may include the following sub-steps:
Sub-step S51. An update request is sent to the service node.
Sub-step S52. New survival state information that is uploaded by the service node with respect to the update request is received, the new survival state information including a new next update time.
Sub-step S53. The next update time of the abnormal service node in the state information table is updated by using the new next update time.

The central node may automatically extend the next update time of the service node according to the state of the central node, or proactively initiates a state update request to the service node to extend the next update time of the service node, thus reducing wrong determination of the service node state due to problems of the central node.

In an example of the present application, for the next update time of a service node that is previously determined as abnormal, the central node may send an update request to the service node. After receiving the request, the service node reports a new next update time according to a task scheduling status of the service node. The central node updates the state information table by using the new next update time to extend the next update time of the service node.

Step 207. The service node is used as a failed service node.

In a preferred example embodiment of the present application, after the step of treating the service node as a failed service node, the method further includes:
deleting the failed service node from the central node; and
notifying other service nodes in the distributed system of the failed service node.

In the example embodiment of the present application, if the service node is determined as failed, related information, such as a registration table, of the failed service node may be deleted from the central node. In addition, other service nodes in the distributed system may be notified of the related information of the failed service node, such as an IP address of the failed service node. After receiving the notification, the service node may locally clear the related information of the failed service node.

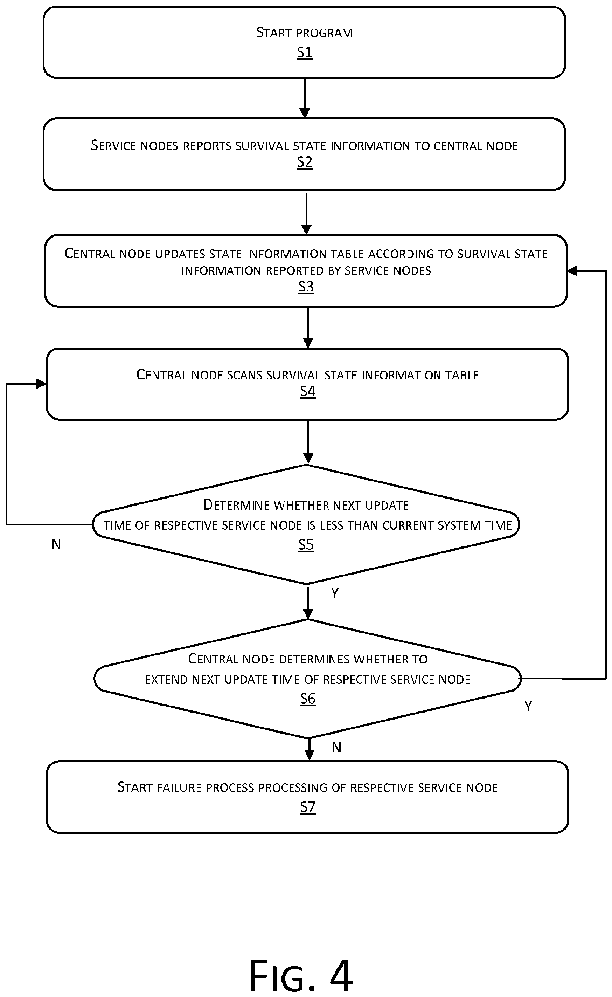

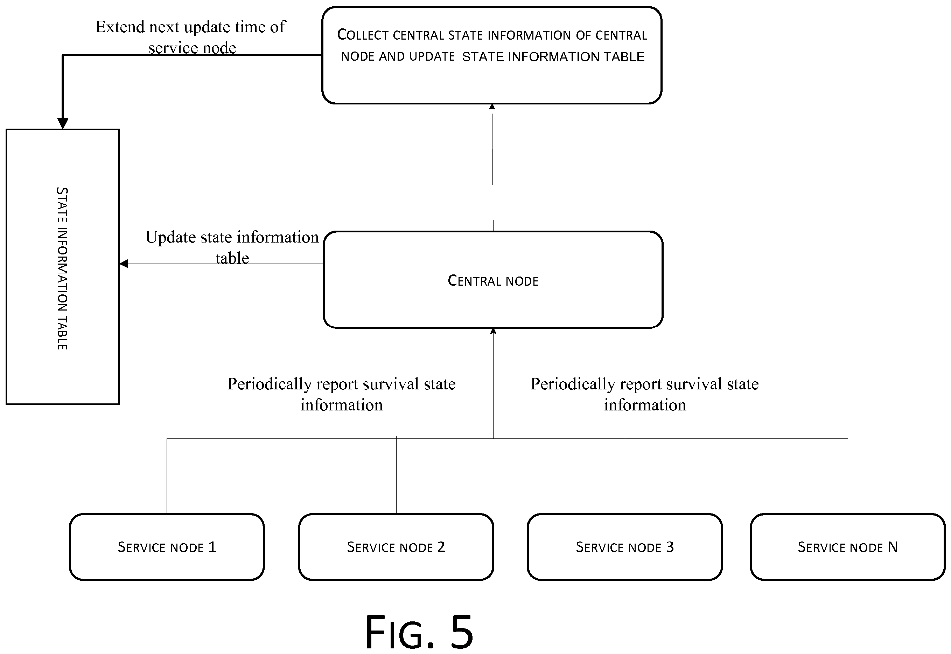

To help those skilled in the art better understand the example embodiment of the present application, a monitoring and processing manner of node states in a distributed system is described below by using a specific example. FIG. 4 shows a schematic diagram of a working process of a central node and service nodes in a distributed system according to the present application, and FIG. 5 shows a schematic diagram of a working principle of a central node and service nodes in a distributed system. Specific steps are shown as follows:
S1. A program is started.
S2. The service nodes report survival state information to the central node.
S3. The central node updates a state information table according to the survival state information of the service nodes, update content including: the latest update time and a next update time.
S4. The central node scans the state information table.
S5. The central node determines whether a next update time of a service node is less than a current system time; if yes, S6 is performed; if no, S4 is performed again to continue scanning the state information table.
S6. The central node determines a network busyness status and a system resource usage status of the central node; if the network is very busy or the system resources are busy, the next update time of the service node in the state information table is extended.
S7. Failure process processing of the service node is started.

**In** the example embodiment of the present application, the central node determines, with reference to its own state, whether there is an abnormality of the service node, thus reducing wrong determination caused by that the node state information table is not updated due to the network congestion or system resource problem of the central node, and reducing an error probability of the central node.

It should be noted that for ease of description, the foregoing method example embodiments are all described as a series of action combinations. However, those skilled in the art should understand that the example embodiments of the present application are not limited to the described sequence of the actions, because some steps may be performed in another sequence or at the same time according to the example embodiments of the present application. **In** addition, those skilled in the art should also understand that the example embodiments described in this specification all belong to preferred example embodiments, and the involved actions are not necessarily mandatory to the example embodiments of the present application.

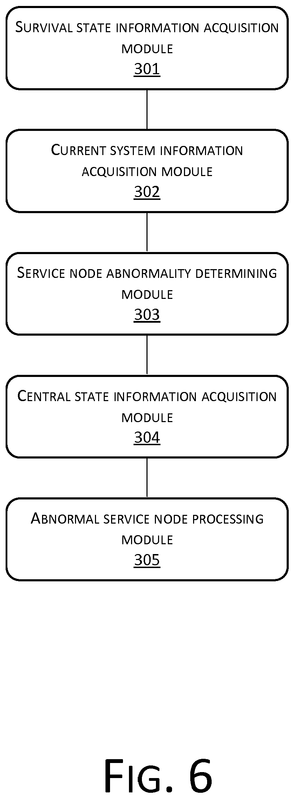

Referring to FIG. 6, a structural block diagram of an example embodiment of an apparatus for processing nodes in a distributed system according to the present application is shown. The nodes include service nodes and a central node. The apparatus specifically may include the following modules:
A survival state information acquisition module 301 is configured to acquire survival state information of the service node.

In a preferred example embodiment of the present application, the distributed system includes a state information table, and the survival state information acquisition module 301 may include the following sub-modules:
a survival state information receiving sub-module configured to receive the survival state information uploaded by the service nodes; and
a first state information table update sub-module configured to update the state information table by using the survival state information of the service nodes.

A current system information acquisition module 302 is configured to acquire current system information of the central node.

A service node abnormality determining module 303 is configured to determine, by using the survival state information and the current system information, whether there is an abnormality of the service node; and call a central state information acquisition module if there is an abnormality of the service node.

The survival state information includes a next update time of the service node, the current system information includes a current system time of the central node, and the service node abnormality determining module 303 may include the following sub-modules:
a state information table traversing sub-module configured to traverse next update times in the state information table when a preset time arrives; and
a service node abnormality determining sub-module configured to determine whether there is an abnormality of the service node by using the next update times and the current system time.

**In** a preferred example embodiment of the present application, the service node abnormality determining sub-module includes:
a time determination unit configured to determine whether the next update time is less than the current system time; if yes, call a first determining unit; and if no, call a second determining unit;
the first determining unit configured to determine that there is an abnormality of the service node; and
the second determining unit configured to determine that there is no abnormality of the service node.

A central state information acquisition module 304 is configured to acquire the central state information of the central node.

An abnormal service node processing module 305 is configured to process the abnormal service node according to the central state information.

The central state information includes network busyness status data and/or system resource usage status data, and the abnormal service node processing module 305 includes:
a central node state determining sub-module configured to determine, by using the network busyness status data and/or the system resource usage status data, whether the central node is overloaded; and if yes, call a second state information table update sub-module; and
the second state information table update sub-module configured to update the survival state information of the abnormal service node in the state information table.

In a preferred example embodiment of the present application, the network busyness status data includes network throughput, the system resource usage status data includes an average load of the system, and the central node state determining sub-module includes:
a first network busyness status determination unit configured to determine whether the network throughput is greater than or equal to a network bandwidth;
a second network busyness status determination unit configured to determine whether the network packet loss rate is greater than a preset packet loss rate;
a system resource usage status determination unit configured to determine whether the average load of the system is greater than a preset load threshold; and
a central node load determining unit configured to determine that the central node is overloaded when the network throughput is greater than or equal to the network bandwidth, and/or the network packet loss rate is greater than the preset packet loss rate, and/or the average load of the system is greater than the preset load threshold.

In a preferred example embodiment of the present application, the second state information table update sub-module includes:
a next update time extension unit configured to extend the next update time of the abnormal service node in the state information table.

In another preferred example embodiment of the present application, the second state information table update sub-module includes:
an update request sending unit configured to send an update request to the service node;
a next update time receiving unit configured to receive new survival state information that is uploaded by the service node with respect to the update request, the new survival state information comprising a new next update time; and
a next update time updating unit configured to update the next update time of the abnormal service node in the state information table by using the new next update time.

In a preferred example embodiment of the present application, the apparatus further includes:
a failed service node determining module configured to use the service node as a failed service node when there is no abnormality of the service node.

In a preferred example embodiment of the present application, the apparatus further includes:
a failed service node deletion module configured to delete the failed service node from the central node; and
a failed service node notification module configured to notify other service nodes in the distributed system of the failed service node.

The apparatus example embodiment is basically similar to the method example embodiment, and therefore is described in a relatively simple manner. For related parts, reference may be made to the partial description of the method example embodiment.

The example embodiments in the specification are described progressively. Each example embodiment focuses on a difference from other example embodiments. For identical or similar parts of the example embodiments, reference may be made to each other.

Those skilled in the art should understand that the example embodiment of the present application may be provided as a method, an apparatus, or a computer program product. Therefore, the example embodiment of the present application may be implemented as a complete hardware example embodiment, a complete software example embodiment, or an example embodiment combining software and hardware. Moreover, the example embodiment of the present application may be in the form of a computer program product implemented on one or more computer usable storage media (including, but not limited to, a magnetic disk memory, a CD-ROM, an optical memory, and the like) including computer usable program codes.

In a typical configuration, the computer device includes one or more processors (CPU), an input/output interface, a network interface, and a memory. The memory may include a volatile memory, a random access memory (RAM) and/or a non-volatile memory or the like in a computer readable medium, for example, a read-only memory (ROM) or a flash RAM. The memory is an example of the computer readable medium. The computer readable medium includes non-volatile and volatile media as well as movable and non-movable media, and may implement information storage by means of any method or technology. Information may be a computer readable instruction, a data structure, and a module of a program or other data. A storage medium of a computer includes, for example, but is not limited to, a phase change memory (PRAM), a static random access memory (SRAM), a dynamic random access memory (DRAM), other types of RAMs, a ROM, an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage devices, or any other non-transmission media, and may be used to store information accessible to the computing device. According to the definition in this text, the computer readable medium does not include transitory media, such as modulated data signals and carriers.

The example embodiments of present application are described with reference to flowcharts and/or block diagrams according to the method, the terminal device (system), and the computer program product of the example embodiments of the present application. It should be understood that a computer program instruction may be used to implement each process and/or block in the flowcharts and/or block diagrams and combinations of processes and/or blocks in the flowcharts and/or block diagrams. The computer-readable instructions may be provided to a general-purpose computer, a special-purpose computer, an embedded processor or a processor of another programmable data processing terminal device to generate a machine, such that the computer or the processor of another programmable data processing terminal device executes an instruction to generate an apparatus configured to implement functions designated in one or more processes in a flowchart and/or one or more blocks in a block diagram.

The computer-readable instructions may also be stored in a computer readable memory that may guide the computer or another programmable data processing terminal device to work in a specific manner, such that the instruction stored in the computer readable memory generates an article of manufacture including an instruction apparatus, and the instruction apparatus implements functions designated by one or more processes in a flowchart and/or one or more blocks in a block diagram.

The computer-readable instructions may also be loaded into a computer or another programmable data processing terminal device, such that a series of operation steps are executed on the computer or another programmable terminal device to generate computer-implemented processing. Therefore, the instruction executed in the computer or another programmable terminal device provides steps for implementing functions designated in one or more processes in a flowchart and/or one or more blocks in a block diagram.

Although preferred example embodiments of the example embodiments of the present application have been described, those skilled in the art may make other changes and modifications to these example embodiments once knowing the basic inventive concept. Therefore, the appended claims are intended to be interpreted as including the preferred example embodiments and all changes and modifications falling into the scope of the claims.

Finally, it should be further noted that relational terms such as "first" and "second" in this text are only used for distinguishing one entity or operation from another entity or operation, but does not necessarily require or imply any such actual relations or sequences between these entities or operations. Moreover, the terms "include", "comprise" or other variations thereof are intended to cover a non-exclusive inclusion, so that a process, method, article or terminal device including a series of elements not only includes the elements, but also includes other elements not clearly listed, or further includes elements inherent to the process, method, article or terminal device. **In** the absence of more limitations, an element defined by "including a/an..." does not exclude that the process, method, article or terminal device including the element further has other identical elements.

A method for processing nodes in a distributed system and an apparatus for processing nodes in a distributed system provided in the present application are described above in detail. Specific examples are used in the text to illustrate the principle and implementations of the present application, and the description of the example embodiments above is merely used to help understand the method of the present application and its core idea.

## Claims

1. A method for processing nodes in a distributed system, wherein the nodes comprise a service node and a central node, and the method comprises:
acquiring survival state information of the service node, wherein the survival state information comprises a next update time of the service node, wherein the next update time is the time when the service node should report next survival state information to the central node;
acquiring current system information of the central node, wherein the current system information comprises a current system time of the central node;
determining, by using the survival state information and the current system information, whether there is an abnormality of the service node;
acquiring central state information of the central node in response to determining that there is the abnormality of the service node, wherein the central state information comprises network busyness status data and/or system resource usage status data; and
processing the service node according to the central state information.

2. The method of claim 1, wherein:
the distributed system comprises a state information table; and
the acquiring the survival state information of the service node comprises:
receiving the survival state information uploaded by the service node; and
updating the state information table by using the survival state information of the service node.

3. The method of claim 2, wherein:
the determining, by using the survival state information and the current system information, whether there is an abnormality of the service node comprises:
traversing to find the next update time of the service node in the state information table when a preset time arrives; and
determining, by using the next update time and the current system time, whether there is the abnormality of the service node.

4. The method of claim 2, wherein:
the processing the service node according to the central state information comprises:
determining, by using the network busyness status data and/or the system resource usage status data, whether the central node is overloaded; and
in response to determining that the central node is overloaded, updating the survival state information of the service node in the state information table.

5. The method of claim 4, wherein:
the network busyness status data comprises a network throughput and a network packet loss rate;
the system resource usage status data comprises an average load of the system; and
the determining, by using the network busyness status data and/or the system resource usage status data, whether the central node is overloaded comprises:
determining whether the network throughput is greater than or equal to a network bandwidth;
determining whether the network packet loss rate is greater than a preset packet loss rate;
determining whether the average load of the system is greater than a preset load threshold; and
determining that the central node is overloaded in response to determining that the network throughput is greater than or equal to the network bandwidth, the network packet loss rate is greater than the preset packet loss rate, and/or the average load of the system is greater than the preset load threshold.

6. The method of claim 4 or claim 5, wherein the updating the survival state information of the service node in the state information table comprises:
A) extending a next update time of the service node in the state information table; or
B) sending an update request to the service node;
receiving new survival state information that is uploaded by the service node with respect to the update request, the new survival state information comprising a new next update time; and
updating a next update time of the service node in the state information table by using the new next update time.

7. The method of any preceding claim, further comprising:
treating the service node as a failed service node in response to determining that there is abnormality of the service node.

8. An apparatus for processing nodes in a distributed system, wherein the nodes comprise a service node and a central node, and the apparatus comprises:
a survival state information acquisition module (301) configured to acquire survival state information of the service node, wherein the survival state information comprises a next update time of the service node, wherein the next update time is the time when the service node should report next survival state information to the central node;
a current system information acquisition module (302) configured to acquire current system information of the central node, wherein the current system information comprises a current system time of the central node;
a service node abnormality determining module (303) configured to determine, by using the survival state information and the current system information, whether there is an abnormality of the service node; and call a central state information acquisition module (304) in response to determining that there is an abnormality of the service node;
the central state information acquisition module configured to acquire central state information of the central node, wherein the central state information comprises network busyness status data and/or system resource usage status data; and
an abnormal service node processing module (305) configured to process the service node that has abnormality according to the central state information.

9. The apparatus of claim 8, wherein:
the distributed system comprises a state information table; and
the survival state information acquisition module comprises:
a survival state information receiving sub-module configured to receive the survival state information uploaded by the service nodes; and
a first state information table update sub-module configured to update the state information table by using the survival state information of the service node.

10. The apparatus of claim 9, wherein:
the service node abnormality determining module comprises:
a state information table traversing sub-module configured to traverse to find the next update time of the service node in the state information table when a preset time arrives; and
a service node abnormality determining sub-module configured to determine, by using the next update time and the current system time, whether there is the abnormality of the service node.

11. The apparatus of claim 10, wherein the service node abnormality determining sub-module comprises:
a time determination unit configured to determine whether the next update time is less than the current system time; in response to determining that the next update time is less than the current system time, call a first determining unit; or if in response to determining that the next update time is not less than the current system time, call a second determining unit;
the first determining unit configured to determine that there is the abnormality of the service node; and
the second determining unit configured to determine that there is no abnormality of the service node.

12. The apparatus of claim 9, wherein:
the abnormal service node processing module comprises:
a central node state determining sub-module configured to determine, by using the network busyness status data and/or the system resource usage status data, whether the central node is overloaded; and, in response to determining that the central node is overloaded, call a second state information table update sub-module; and
the second state information table update sub-module configured to update the survival state information of the abnormal service node in the state information table.

13. The apparatus of claim 12, wherein:
the network busyness status data comprises a network throughput and a network packet loss rate;
the system resource usage status data comprises an average load of the system; and
the central node state determining sub-module comprises:
a first network busyness status determination unit configured to determine whether the network throughput is greater than or equal to a network bandwidth;
a second network busyness status determination unit configured to determine whether the network packet loss rate is greater than a preset packet loss rate;
a system resource usage status determination unit configured to determine whether the average load of the system is greater than a preset load threshold; and
a central node load determining unit configured to determine that the central node is overloaded when the network throughput is greater than or equal to the network bandwidth, the network packet loss rate is greater than the preset packet loss rate, and/or the average load of the system is greater than the preset load threshold.

14. The apparatus of claim 12 or claim 13, wherein the second state information table update sub-module comprises:
A) a next update time extension unit configured to extend the next update time of the service node in the state information table; or
B) an update request sending unit configured to send an update request to the service node;
a next update time receiving unit configured to receive new survival state information that is uploaded by the service node with respect to the update request, the new survival state information comprising a new next update time; and
a next update time updating unit configured to update the next update time of the service node in the state information table by using the new next update time.

15. The apparatus of any one of claims 8 to 14, further comprising:
a failed service node determining module configured to treat the service node as a failed service node in response to determining that there is abnormality of the service node.

## Patentansprüche

1. Verfahren zum Verarbeiten von Knoten in einem verteilten System, wobei die Knoten einen Dienstknoten und einen zentralen Knoten umfassen und das Verfahren umfasst:
Erfassen von Überlebenszustandsinformationen des Dienstknotens, wobei die Überlebenszustandsinformationen eine nächste Aktualisierungszeit des Dienstknotens umfassen, wobei die nächste Aktualisierungszeit die Zeit ist, zu der der Dienstknoten nächste Überlebenszustandsinformationen an den zentralen Knoten melden sollte;
Erfassen aktueller Systeminformationen des zentralen Knotens, wobei die aktuellen Systeminformationen eine aktuelle Systemzeit des zentralen Knotens umfassen;
Bestimmen, durch Verwenden der Überlebenszustandsinformationen und der aktuellen Systeminformationen, ob eine Anomalie des Dienstknotens vorliegt;
Erfassen zentraler Zustandsinformationen des zentralen Knotens als Reaktion auf das Bestimmen, dass die Anomalie des Dienstknotens vorliegt, wobei die zentralen Zustandsinformationen Netzwerkauslastungszustandsdaten und/oder Systemressourcennutzungszustandsdaten umfassen; und
Verarbeiten des Dienstknotens gemäß den zentralen Zustandsinformationen.

2. Verfahren nach Anspruch 1, wobei:
das verteilte System eine Zustandsinformationstabelle umfasst und
das Erfassen der Überlebenszustandsinformationen des Dienstknotens umfasst:
Empfangen der Überlebenszustandsinformationen, die durch den Dienstknoten hochgeladen werden; und
Aktualisieren der Zustandsinformationstabelle durch Verwenden der Überlebenszustandsinformationen des Dienstknotens.

3. Verfahren nach Anspruch 2, wobei:
das Bestimmen, durch Verwenden der Überlebenszustandsinformationen und der aktuellen Systeminformationen, ob eine Anomalie des Dienstknotens vorliegt, umfasst:
Durchlaufen, um die nächste Aktualisierungszeit des Dienstknotens in der Zustandsinformationstabelle zu finden, wenn eine voreingestellte Zeit erreicht ist; und
Bestimmen, durch Verwenden der nächsten Aktualisierungszeit und der aktuellen Systemzeit, ob die Anomalie des Dienstknotens vorliegt.

4. Verfahren nach Anspruch 2, wobei:
das Verarbeiten des Dienstknotens gemäß den zentralen Zustandsinformationen umfasst:
Bestimmen, durch Verwenden der Netzwerkauslastungszustandsdaten und/oder der Systemressourcennutzungszustandsdaten, ob der zentrale Knoten überlastet ist; und
als Reaktion auf das Bestimmen, dass der zentrale Knoten überlastet ist, Aktualisieren der Überlebenszustandsinformationen des Dienstknotens in der Zustandsinformationstabelle.

5. Verfahren nach Anspruch 4, wobei:
die Netzwerkauslastungszustandsdaten einen Netzwerkdurchsatz und eine Netzwerkpaketverlustrate umfassen;
die Systemressourcennutzungszustandsdaten eine durchschnittliche Last des Systems umfassen und
das Bestimmen, durch Verwenden der Netzwerkauslastungszustandsdaten und/oder der Systemressourcennutzungszustandsdaten, ob der zentrale Knoten überlastet ist, umfasst:
Bestimmen, ob der Netzwerkdurchsatz größer oder gleich einer Netzwerkbandbreite ist;
Bestimmen, ob die Netzwerkpaketverlustrate größer als eine voreingestellte Paketverlustrate ist;
Bestimmen, ob die durchschnittliche Last des Systems größer als eine voreingestellte Lastschwelle ist; und
Bestimmen, dass der zentrale Knoten überlastet ist, als Reaktion auf das Bestimmen, dass der Netzwerkdurchsatz größer oder gleich der Netzwerkbandbreite ist, die Netzwerkpaketverlustrate größer als die voreingestellte Paketverlustrate ist und/oder die durchschnittliche Last des Systems größer als die voreingestellte Lastschwelle ist.

6. Verfahren nach Anspruch 4 oder Anspruch 5, wobei das Aktualisieren der Überlebenszustandsinformationen des Dienstknotens in der Zustandsinformationstabelle umfasst:
A) Verlängern einer nächsten Aktualisierungszeit des Dienstknotens in der Zustandsinformationstabelle oder
B) Senden einer Aktualisierungsanforderung an den Dienstknoten;
Empfangen neuer Überlebenszustandsinformationen, die durch den Dienstknoten in Bezug auf die Aktualisierungsanforderung hochgeladen werden, wobei die neuen Überlebenszustandsinformationen eine neue nächste Aktualisierungszeit umfassen; und
Aktualisieren einer nächsten Aktualisierungszeit des Dienstknotens in der Zustandsinformationstabelle durch Verwenden der neuen nächsten Aktualisierungszeit.

7. Verfahren nach einem der vorhergehenden Ansprüche, das ferner umfasst:
Behandeln des Dienstknotens als einen ausgefallenen Dienstknoten als Reaktion auf das Bestimmen, dass eine Anomalie des Dienstknotens vorliegt.

8. Vorrichtung zum Verarbeiten von Knoten in einem verteilten System, wobei die Knoten einen Dienstknoten und einen zentralen Knoten umfassen und die Vorrichtung umfasst:
ein Überlebenszustandsinformationserfassungsmodul (301), das zum Erfassen von Überlebenszustandsinformationen des Dienstknotens, wobei die Überlebenszustandsinformationen eine nächste Aktualisierungszeit des Dienstknotens umfassen, wobei die nächste Aktualisierungszeit die Zeit ist, zu der der Dienstknoten nächste Überlebenszustandsinformationen an den zentralen Knoten melden sollte, ausgelegt ist;
ein Modul zur Erfassung aktueller Systeminformationen (302), das zum Erfassen aktueller Systeminformationen des zentralen Knotens, wobei die aktuellen Systeminformationen eine aktuelle Systemzeit des zentralen Knotens umfassen, ausgelegt ist;
ein Dienstknotenanomaliebestimmungsmodul (303), das zum Bestimmen, durch Verwenden der Überlebenszustandsinformationen und der aktuellen Systeminformationen, ob eine Anomalie des Dienstknotens vorliegt, und Aufrufen eines Moduls zur Erfassung zentraler Zustandsinformationen (304) als Reaktion auf das Bestimmen, dass eine Anomalie des Dienstknotens vorliegt, ausgelegt ist;
wobei das Modul zur Erfassung zentraler Zustandsinformationen zum Erfassen zentraler Zustandsinformationen des zentralen Knotens, wobei die zentralen Zustandsinformationen Netzwerkauslastungszustandsdaten und/oder Systemressourcennutzungszustandsdaten umfassen, ausgelegt ist; und
ein Modul zum Verarbeiten anomaler Dienstknoten (305), das zum Verarbeiten des Dienstknotens, der gemäß den zentralen Zustandsinformationen eine Anomalie aufweist, ausgelegt ist.

9. Vorrichtung nach Anspruch 8, wobei:
das verteilte System eine Zustandsinformationstabelle umfasst und
das Überlebenszustandsinformationserfassungsmodul umfasst:
ein Überlebenszustandsinformationsempfangsuntermodul, das zum Empfangen der Überlebenszustandsinformationen, die durch die Dienstknoten hochgeladen werden, ausgelegt ist; und
ein erstes Zustandsinformationstabellenaktualisierungsuntermodul, das zum Aktualisieren der Zustandsinformationstabelle durch Verwenden der Überlebenszustandsinformationen des Dienstknotens ausgelegt ist.

10. Vorrichtung nach Anspruch 9, wobei:
das Dienstknotenanomaliebestimmungsmodul umfasst:
ein Zustandsinformationstabellendurchlaufuntermodul, das zum Durchlaufen, um die nächste Aktualisierungszeit des Dienstknotens in der Zustandsinformationstabelle zu finden, wenn eine voreingestellte Zeit erreicht ist, ausgelegt ist; und
ein Dienstknotenanomaliebestimmungsuntermodul, das zum Bestimmen, durch Verwenden der nächsten Aktualisierungszeit und der aktuellen Systemzeit, ob die Anomalie des Dienstknotens vorliegt, ausgelegt ist.

11. Vorrichtung nach Anspruch 10, wobei das Dienstknotenanomaliebestimmungsuntermodul umfasst:
eine Zeitbestimmungseinheit, die zum Bestimmen, ob die nächste Aktualisierungszeit kleiner als die aktuelle Systemzeit ist; als Reaktion auf das Bestimmen, dass die nächste Aktualisierungszeit kleiner als die aktuelle Systemzeit ist, Aufrufen einer ersten Bestimmungseinheit oder, wenn als Reaktion auf das Bestimmen, dass die nächste Aktualisierungszeit nicht kleiner als die aktuelle Systemzeit ist, Aufrufen einer zweiten Bestimmungseinheit ausgelegt ist;
wobei die erste Bestimmungseinheit zum Bestimmen, dass die Anomalie des Dienstknotens vorliegt, ausgelegt ist und
wobei die zweite Bestimmungseinheit zum Bestimmen, dass keine Anomalie des Dienstknotens vorliegt, ausgelegt ist.

12. Vorrichtung nach Anspruch 9, wobei:
das Modul zum Verarbeiten eines anomalen Dienstknotens umfasst:
ein Untermodul zum Bestimmen des Zustands eines zentralen Knotens, das zum Bestimmen, durch Verwenden der Netzwerkauslastungszustandsdaten und/oder der Systemressourcennutzungszustandsdaten, ob der zentrale Knoten überlastet ist; und als Reaktion auf das Bestimmen, dass der zentrale Knoten überlastet ist, Aufrufen eines zweiten Zustandsinformationstabellenaktualisierungsuntermoduls ausgelegt ist; und
das zweite Zustandsinformationstabellenaktualisierungsuntermodul zum Aktualisieren der Überlebenszustandsinformationen des anomalen Dienstknotens in der Zustandsinformationstabelle ausgelegt ist.

13. Vorrichtung nach Anspruch 12, wobei:
die Netzwerkauslastungszustandsdaten einen Netzwerkdurchsatz und eine Netzwerkpaketverlustrate umfassen;
die Systemressourcennutzungszustandsdaten eine durchschnittliche Last des Systems umfassen und
das Untermodul zum Bestimmen des Zustands eines zentralen Knotens umfasst:
eine erste Netzwerkauslastungszustandsbestimmungseinheit, die zum Bestimmen, ob der Netzwerkdurchsatz größer oder gleich einer Netzwerkbandbreite ist, ausgelegt ist;
eine zweite Netzwerkauslastungszustandsbestimmungseinheit, die zum Bestimmen, ob die Netzwerkpaketverlustrate größer als eine voreingestellte Paketverlustrate ist, ausgelegt ist;
eine Systemressourcennutzungszustandsbestimmungseinheit, die zum Bestimmen, ob die durchschnittliche Last des Systems größer als eine voreingestellte Lastschwelle ist, ausgelegt ist; und
eine Einheit zum Bestimmen der Last eines zentralen Knotens, die zum Bestimmen, dass der zentrale Knoten überlastet ist, wenn der Netzwerkdurchsatz größer oder gleich der Netzwerkbandbreite ist, die Netzwerkpaketverlustrate größer als die voreingestellte Paketverlustrate ist und/oder die durchschnittliche Last des Systems größer als die voreingestellte Lastschwelle ist, ausgelegt ist.

14. Vorrichtung nach Anspruch 12 oder Anspruch 13, wobei das zweite Zustandsinformationstabellenaktualisierungsuntermodul umfasst:
A) eine Einheit zur Verlängerung der nächsten Aktualisierungszeit, die zum Verlängern der nächsten Aktualisierungszeit des Dienstknotens in der Zustandsinformationstabelle ausgelegt ist; oder
B) eine Aktualisierungsanforderungssendeeinheit, die zum Senden einer Aktualisierungsanforderung an den Dienstknoten ausgelegt ist;
eine Einheit zum Empfangen einer nächsten Aktualisierungszeit, die zum Empfangen neuer Überlebenszustandsinformationen, die durch den Dienstknoten in Bezug auf die Aktualisierungsanforderung hochgeladen werden, wobei die neuen Überlebenszustandsinformationen eine neue nächste Aktualisierungszeit umfassen, ausgelegt ist; und
eine Einheit zum Aktualisieren einer nächsten Aktualisierungszeit, die zum Aktualisieren der nächsten Aktualisierungszeit des Dienstknotens in der Zustandsinformationstabelle durch Verwenden der neuen nächsten Aktualisierungszeit ausgelegt ist.

15. Vorrichtung nach einem der Ansprüche 8 bis 14, die ferner umfasst:
ein Modul zum Bestimmen eines ausgefallenen Dienstknotens, das zum Behandeln des Dienstknotens als einen ausgefallenen Dienstknoten als Reaktion auf das Bestimmen, dass eine Anomalie des Dienstknotens vorliegt, ausgelegt ist.

## Revendications

1. Procédé de traitement de nœuds dans un système distribué, les nœuds comprenant un nœud de service et un nœud central, et le procédé comprenant les étapes suivantes :
acquérir des informations d'état de survie du nœud de service, où les informations d'état de survie comprennent le temps de la prochaine mise à jour du nœud de service, le temps de la prochaine mise à jour étant le temps où le nœud de service doit rapporter les prochaines informations d'état de survie au nœud central ;
acquérir les informations système courantes du nœud central, les informations système courantes comprenant le temps système courant du nœud central ;
déterminer, en utilisant les informations d'état de survie et les informations système courantes, s'il existe une anomalie du nœud de service ;
acquérir des informations d'état central du nœud central en réponse à la détermination de l'anomalie du nœud de service, où les informations d'état central comprennent des données d'état de disponibilité du réseau et/ou des données d'état d'utilisation des ressources du système ; et
traiter le nœud de service en fonction des informations d'état central.

2. Procédé selon la revendication 1, dans lequel :
le système distribué comprend une table d'informations d'état ; et
l'acquisition des informations d'état de survie du nœud de service comprend :
la réception des informations d'état de survie téléchargées par le nœud de service ; et
la mise à jour de la table d'informations d'état en utilisant les informations d'état de survie du nœud de service.

3. Procédé selon la revendication 2, dans lequel :
la détermination, à l'aide des informations d'état de survie et des informations système courantes, du fait qu'il existe ou non une anomalie du nœud de service comprend les étapes suivantes :
parcourir pour trouver le prochain temps de mise à jour du nœud de service dans la table d'informations d'état lorsqu'un temps prédéfini arrive ; et
déterminer, à l'aide du prochain temps de mise à jour et du temps système courant, s'il existe une anomalie du nœud de service.

4. Procédé selon la revendication 2, dans lequel :
le traitement du nœud de service en fonction des informations d'état central comprend les étapes suivantes :
déterminer, à l'aide des données d'état de disponibilité du réseau et/ou des données d'état d'utilisation des ressources système, si le nœud central est ou non surchargé ; et
en réponse à la détermination que le nœud central est surchargé, mettre à jour les informations d'état de survie du nœud de service dans la table d'informations d'état.

5. Procédé selon la revendication 4, dans lequel :
les données d'état de disponibilité du réseau comprennent un débit réseau et un taux de perte de paquets réseau ;
les données d'état d'utilisation des ressources système comprennent une charge moyenne du système ; et
la détermination, à l'aide des données d'état de disponibilité du réseau et/ou des données d'état d'utilisation des ressources système, du fait que le nœud central est ou non surchargé comprend les étapes suivantes :
déterminer si le débit du réseau est supérieur ou égal à une largeur de bande du réseau ;
déterminer si le taux de perte de paquets du réseau est supérieur à un taux de perte de paquets prédéfini ;
déterminer si la charge moyenne du système est supérieure à un seuil de charge prédéterminé ; et
déterminer que le nœud central est surchargé en réponse à la détermination que le débit du réseau est supérieur ou égal à la largeur de bande du réseau, le taux de perte de paquets du réseau est supérieur au taux de perte de paquets préétabli, et/ou la charge moyenne du système est supérieure au seuil de charge préétabli.

6. Procédé selon la revendication 4 ou la revendication 5, dans lequel la mise à jour des informations d'état de survie du nœud de service dans la table d'informations d'état comprend les étapes suivantes :
A) prolonger le temps de la prochaine mise à jour du nœud de service dans la table d'informations d'état ; ou
B) envoyer une demande de mise à jour au nœud de service ;
recevoir de nouvelles informations d'état de survie qui sont téléchargées par le nœud de service en ce qui concerne la demande de mise à jour, les nouvelles informations d'état de survie comprenant le nouveau temps de la prochaine mise à jour ; et
mettre à jour le temps de la prochaine mise à jour du nœud de service dans la table d'informations d'état en utilisant le nouveau temps de la prochaine mise à jour.

7. Procédé selon l'une quelconque des revendications précédentes, comprenant en outre l'étape suivante :
traiter le nœud de service comme un nœud de service défaillant en réponse à la détermination de l'existence d'une anomalie du nœud de service.

8. Appareil de traitement de nœuds dans un système distribué, les nœuds comprenant un nœud de service et un nœud central, et l'appareil comprenant :
un module d'acquisition d'informations d'état de survie (301) configuré pour acquérir des informations d'état de survie du nœud de service, où les informations d'état de survie comprennent le temps de la prochaine mise à jour du nœud de service, le temps de la prochaine mise à jour étant le temps où le nœud de service doit rapporter les prochaines informations d'état de survie au nœud central ;
un module d'acquisition d'informations système courantes (302) configuré pour acquérir des informations système courantes du nœud central, où les informations système courantes comprennent le temps système courant du nœud central ;
un module de détermination d'anomalie de nœud de service (303) configuré pour déterminer, en utilisant les informations d'état de survie et les informations système courantes, s'il existe ou non une anomalie du nœud de service ; et appeler un module d'acquisition d'informations d'état central (304) en réponse à la détermination qu'il existe une anomalie du nœud de service ;
le module d'acquisition d'informations d'état central configuré pour acquérir des informations d'état central du nœud central, où les informations d'état central comprennent des données d'état de disponibilité du réseau et/ou des données d'état d'utilisation des ressources du système ; et
un module de traitement de nœud de service anormal (305) configuré pour traiter le nœud de service qui présente une anomalie en fonction des informations d'état central.

9. Appareil selon la revendication 8, dans lequel :
le système distribué comprend une table d'informations d'état ; et
le module d'acquisition d'informations d'état de survie comprend :
un sous-module de réception d'informations d'état de survie configuré pour recevoir les informations d'état de survie téléchargées par les nœuds de service ; et
un premier sous-module de mise à jour de table d'informations d'état configuré pour mettre à jour la table d'informations d'état en utilisant les informations d'état de survie du nœud de service.

10. Appareil selon la revendication 9, dans lequel :
le module de détermination d'anomalie du nœud de service comprend :
un sous-module de parcours de table d'informations d'état conçu pour parcourir la table afin de rechercher le prochain temps de mise à jour du nœud de service dans la table d'informations d'état lorsqu'un temps prédéterminé arrive ; et
un sous-module de détermination d'anomalie de nœud de service conçu pour déterminer, à l'aide du prochain temps de mise à jour et du temps système courant, s'il existe une anomalie du nœud de service.

11. Appareil selon la revendication 10, dans lequel le sous-module de détermination d'anomalie de nœud de service comprend :
une unité de détermination du temps configurée pour déterminer si le temps de la prochaine mise à jour est inférieur au temps système courant ; en réponse à la détermination que le temps de la prochaine mise à jour est inférieur au temps système courant, appeler une première unité de détermination ; ou si, en réponse à la détermination que le temps de la prochaine mise à jour n'est pas inférieur au temps système courant, appeler une deuxième unité de détermination ;
la première unité de détermination étant configurée pour déterminer qu'il y a une anomalie du nœud de service ; et
la deuxième unité de détermination étant configurée pour déterminer qu'il n'y a pas d'anomalie du nœud de service.

12. Appareil selon la revendication 9, dans lequel :
le module de traitement de nœud de service anormal comprend :
un sous-module de détermination d'état de nœud central configuré pour déterminer, à l'aide des données d'état de disponibilité du réseau et/ou des données d'état d'utilisation des ressources système, si le nœud central est surchargé ; et, en réponse à la détermination de la surcharge du nœud central, appeler un sous-module de mise à jour de la table d'informations d'état ; et
le deuxième sous-module de mise à jour de table d'informations d'état configuré pour mettre à jour les informations d'état de survie du nœud de service anormal dans la table d'informations d'état.

13. Appareil selon la revendication 12, dans lequel :
les données d'état de disponibilité du réseau comprennent un débit réseau et un taux de perte de paquets réseau ;
les données d'état d'utilisation des ressources système comprennent une charge moyenne du système ; et
le sous-module de détermination d'état du nœud central comprend :
une première unité de détermination d'état de disponibilité du réseau configurée pour déterminer si le débit du réseau est supérieur ou égal à une bande passante du réseau ;
une deuxième unité de détermination d'état de disponibilité du réseau configurée pour déterminer si le taux de perte de paquets du réseau est supérieur à un taux de perte de paquets prédéterminé ;
une unité de détermination de l'état d'utilisation des ressources système configurée pour déterminer si la charge moyenne du système est supérieure à un seuil de charge prédéterminé ; et
une unité de détermination de charge du nœud central configurée pour déterminer que le nœud central est surchargé lorsque le débit du réseau est supérieur ou égal à la largeur de bande du réseau, le taux de perte de paquets du réseau est supérieur au taux de perte de paquets préétabli, et/ou la charge moyenne du système est supérieure au seuil de charge préétabli.

14. Appareil selon la revendication 12 ou la revendication 13, dans lequel le deuxième sous-module de mise à jour de table d'informations d'état comprend :
A) une unité d'extension du temps de la prochaine mise à jour configurée pour étendre le temps de la prochaine mise à jour du nœud de service dans la table d'informations d'état ; ou
B) une unité d'envoi de demande de mise à jour configurée pour envoyer une demande de mise à jour au nœud de service ;
une unité de réception du temps de la prochaine mise à jour configurée pour recevoir de nouvelles informations d'état de survie qui sont téléchargées par le nœud de service en ce qui concerne la demande de mise à jour, les nouvelles informations d'état de survie comprenant un nouveau temps de la prochaine mise à jour ; et
une unité de mise à jour du temps de la prochaine mise à jour configurée pour mettre à jour le prochain temps de mise à jour du nœud de service dans la table d'informations d'état en utilisant le nouveau temps de la prochaine mise à jour.

15. Appareil selon l'une quelconque des revendications 8 à 14, comprenant en outre :
un module de détermination de nœud de service défaillant configuré pour traiter le nœud de service comme un nœud de service défaillant en réponse à la détermination de l'existence d'une anomalie du nœud de service.
